Europäisches Patentamt

European Patent Office

Office européen des brevets

(19)

(11) Numéro de publication: **0 038 743**
**B1**

(12) **FASCICULE DE BREVET EUROPEEN**

(45) Date de publication du fascicule du brevet: **19.10.83**

(21) Numéro de dépôt: **81400579.9**

(22) Date de dépôt: **10.04.81**

(51) Int. Cl.³: **D 04 H 1/54,** B 01 D 39/16, A 41 D 13/00

(54) Procédé de traitement superficiel d'une couche filtrante fibreuse, non tissée et très aérée, formant électret et son application aux filtres et aux masques respiratoires notamment.

(30) Priorité: **18.04.80 FR 8008810**

(43) Date de publication de la demande:
**28.10.81 Bulletin 81/43**

(45) Mention de la délivrance du brevet:
**19.10.83 Bulletin 83/42**

(84) Etats contractants désignés:
**BE DE FR GB IT NL SE**

(56) Documents cités:
**DE - A - 2 249 138**
**FR - A - 2 416 535**

(73) Titulaire: **Seplast, Société Anonyme dite**
**13, Boulevard Louise Michel**
**F-92232 Gennevilliers (FR)**

(72) Inventeur: **Thiebault, Bernard Camille**
**31 Avenue Charles de Gaulle**
**F-95160 Montmorency (FR)**

(74) Mandataire: **Caunet, Jean et al,**
**Cabinet BEAU DE LOMENIE 55, rue d'Amsterdam**
**F-75008 Paris (FR)**

Courier Press, Leamington Spa, England.

**Procédé de traitement superficiel d'une couche filtrante fibreuse, non tissée et très aérée, formant électret et son application aux filtres et aux masques respiratoires notamment.**

Pour la filtration de l'air, les matériaux à base de fibres diélectriques, réunies en une couche non tissée très aérée et formant un électret, sont exceptionnellement efficaces et avantageux du fait de leur action électrostatique naturelle ou provoquée.

Pour mémoire, il est utile de rappeler qu'un diélectrique est un corps à l'intérieur duquel peut s'établir un champ électrique sans perte d'énergie et qui, par suite, ne conduit pas le courant. Un électret est alors un diélectrique qui reste électrisé d'une façon permanente après avoir été soumis à un champ électrique temporaire.

Un tel matériau est décrit dans la demande de brevet français n° 2 374 939. Le matériau qui est fabriqué par le déposant de cette demande: la société Verto pour cet usage est à base de fibres de polypropylène et fait l'objet des essais exposés dans ce qui suit pour la mise en évidence des caractéristiques et résultats avantageux de l'invention.

La couche filtrante précitée fait l'objet d'applications multiples et plus spécialement de la constitution de filtres, de la fabrication de masques respiratoires, etc.

Dans les filtres, les couches sont logées dans un boîtier, une poche ou autres, appropriés à l'utilisation qui doit en être faite.

Dans les masques respiratoires, la couche filtrante est une enveloppe appliquée contre une coquille intérieure, poreuse et relativement rigide s'adaptant au visage, cette enveloppe étant munie d'un revêtement extérieur également poreux.

Il est en effect impossible d'utiliser ces non-tissés sans une protection superficielle, en raison de leur peluchage extrême qui rend le port et la présentation des masques fort désagréables.

Ce peluchage existe aussi pour les filtres et rend la pose des couches délicate, longue, imparfaite et désagréable pour le personnel chargé de cette opération obligeant à la pose de films poreux sur les deux faces.

Plus spécialement, en ce qui concerne les masques connus, la coquille intérieure préformée et relativement rigide s'impose car la couche filtrante ne possède aucune tenue mécanique et pas du tout de rigidité; une protection extérieure s'impose également, non seulement pour améliorer l'aspect et rendre la manipulation agréable, mais également pour éviter que les fibres ne s'échappent et ne se mettent en suspension dans l'air ambiant. D'autre part, la couche filtrante, même équipée d'un revêtement extérieur classique, n'est pas décolmatable car elle piège les particules filtrées et les garde prisonnières. Par ailleurs, les protections superficielles connues ont pour effet d'augmenter la dépression du flux gazeux traversant la couche filtrante, d'autant plus que le colmatage apparaît et s'accentue.

La présente invention a pour but d'ôter à la couche filtrante son aspect superficiel pelucheux et de former, sans aucune adjonction, une peau poreuse décolmatable et n'accroissant pas la dépression de façon que, si la couche constitue un masque, le port de celui-ci soit confortable et agréable et que la respiration puisse s'effectuer sans aucune gêne. Subsidiairement, cette peau poreuse intégrée doit produire une filtration par effet de surface améliorant la filtration obtenue dans la couche par effect électrostatique.

Dans ce but et conformément au procédé de l'invention, on lisse la ou les surfaces pelucheuses de ladite couche en exerçant une friction légère sous faible pression afin que les fibres saillantes soient couchées sur la masse fibreuse sous-jacente sans que celle-ci soit comprimée, la friction étant exercée à une température de ramollissement telle que les fibres superficielles se soudent entre elles pour former une peau ou glacis poreux.

De préférence, le lissage est effectué au moyen d'une masse métallique dont la température est comprise entre 115 et 150°C. La vitesse de défilement relative entre la couche filtrante brute et la masse chauffante, la pression appliquée entre elles et la durée de contact sont déterminées en fonction de l'apport de chaleur pour engendrer une fusion partielle auto-collante des fibres de surface en les lissant, mais en évitant que cet effet ne se propage dans la masse.

Divers autres caractéristiques et avantages de l'invention ressortent d'ailleurs de la description détaillée qui suit.

Des modes d'exécution du procédé de l'invention et leur application à un masque respiratoire sont représentés, à titre d'exemples non limitatifs sur le dessin annexé.

Sur ce dessin:

la figure 1 est une coupe schématique d'un masque respiratoire faisant application du procédé de l'invention,

les figures 2 et 3 sont des sections montrant à grande échelle une couche filtrante respectivement telle qu'elle a été utilisée jusqu'à présent, brute de fabrication et telle qu'elle est maintenant après traitement selon l'invention, et

les figures 4 et 5 sont des vues schématiques illustrant deux dispositifs mettant en oeuvre deux modes d'exécution différents du procédé de l'invention.

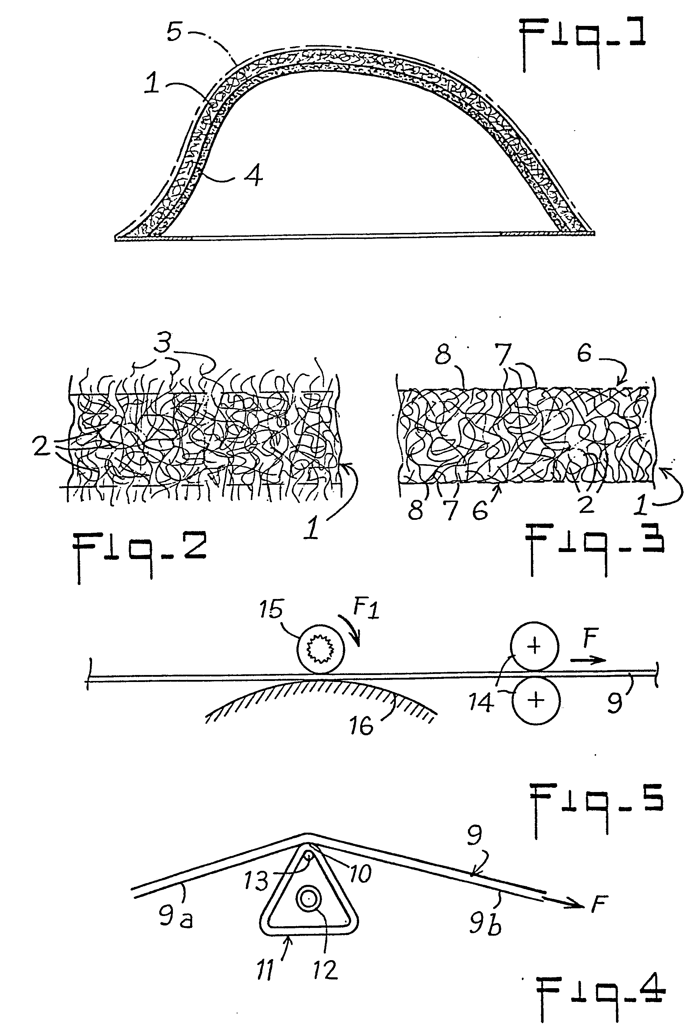

Ainsi que cela ressort de la figure 2, la couche filtrante 1, définie dans ce qui précède, comporte des fibres diélectriques 2, de préférence en polypropylène, entremêlées de façon lâche pour constituer un matériau non tissé très aéré et traitées par un champ électrique temporaire afin de devenir un électret durablement efficace pour filtrer par effet électrostatique. Bien entendu, toutes fibres de nature quelconque peuvent être utilisées du moment que l'effet électrostatique existe qu'il soit naturel ou provoqué. Les fibres 2 font saillie en surface en conférent à la couche 1 un aspect pelucheux par leurs parties émergentes 3.

Dans l'application particulière que montre le figure 1 et qui concerne un masque respiratoire, celui-ci comporte une coquille poreuse 4 relativement rigide et adaptée au visage. Sur cette coquille est fixée, par collage ou autre moyen équivalent ne nuisant pas à la porosité, une couche 1. La face apparente extérieure de la couche 1 est pelucheuse et, pour remédier aux inconvénients évoqués dans ce qui précède, cette face est recouverte par un revêtement 5 également poreux qui est délimité par un trait mixte car, s'il existe dans l'art antérieur, l'invention a pour but de le supprimer.

A cet effet, la couche filtrante brute 1 est remplacée par une couche analogue 6 traitée superficiellement et illustrée par la figure 3.

Le traitement considéré consiste à lisser la surface pelucheuse extérieure en exerçant une friction légère sous faible pression afin que les parties émergentes 3 des fibres soient couchées en 7 sur la masse fibreuse sous-jacente. Cette friction doit être appliquée à une température de ramollissement telle que les fibres couchées 7 se soudent entre elles et avec les fibres au contact desquelles elles se trouvent afin de former par cen entrelacs soudé et aplati 8 une peau ou glacis poreux, relativement lisse et exempt de fibres qui rebroussent en étant susceptibles de se détacher.

Ce résultat peut facilement être obtenu avec un fer à repasser, mais il est bien évident que, si cette technique convient à des essais, elle ne peut s'appliquer de façon homogène et rentable à une production industrielle.

Dans ce cadre, il est possible cependant de retenir l'enseignement selon lequel le lissage peut être effectué au moyen d'une masse métallique chauffante dont la température est comprise entre 115 et 150°C.

S'il s'agit de fibres de polypropylène, on a constaté qu'en de çà de 115°C le lissage ne s'opère pas et qu'au-delà de 150°C les fibres ont tendance à fondre et à se rétracter; en outre, l'effet électrostatique perd son efficacité.

Selon un premier mode d'exécution illustré par la figure 4, une bande 9 en matériau filtrant est entraînée en translation continue dans le sens de la flèche F par tout moyen approprié et s'appuie par sa face à traiter sur la crête 10 d'un miroir chauffant 11. Dans l'exemple représenté, ce miroir est un tube métallique poli de section triangulaire, revêtu de "Téflon" ou autre matière anticollante et contenant une résistance électrique de chauffage 12 dont la température est stabilisée grâce à une thermosonde ou un régulateur électronique 13 placé sous la crête 10. En raison de la pression d'appui et de la tension de défilement, le brin amont 9a et le brin aval 9b de la bande 9 forment un dièdre dont l'arête coïncide avec la crête 10 du miroir chauffant 11.

Selon un deuxième mode d'exécution schématisé sur la figure 5, la bande 9 en matériau filtrant est entraînée en défilement continu dans le sens de la flèche F par une calandre 14 dont les cylindres compriment légèrement la bande. En amont, cette bande circule entre un cylindre chauffant 15 de lissage et en support sous-jacent 16. Dans l'exemple représenté, le cylindre 15 tourne dans le sens de la flèche F1 opposé à celui du défilement et le support arqué 16 est fixe, pour produire l'effet de lissage ou de repassage recherché.

Bien entendu, la vitesse de défilement relative entre la couche filtrante brute et la masse chauffante, la pression appliquée entre elles et la durée de contact sont déterminées en fonction de l'apport de chaleur pour engendrer une fusion partielle auto-collante des fibres de surface en les lissant, mais en évitant que cet effet ne se propage dans la masse. Par exemple dans le premier mode d'exécution (figure 4), la température du miroir chauffant peut être régulée à 137°C ± 5°C, la vitesse de défilement est alors de 6 m/min, l'angle des deux brins 9a et 9b est de 150° et la tension de la bande 9 en fibres de polypropylène est de 400 g pour une largeur de bande de 700 mm.

Ce traitement est appliqué sur la face inférieure de la bande pour qu'elle constitue la face apparente extérieure d'un masque respiratoire, la face non traitée étant rendue solidaire d'une coquille poreuse 4.

Un tel masque (1, 4) possède les propriétés exposées dans ce qui précède, propriétés qui sont bien plus avantageuses, ainsi que cela ressort du tableau d'essai mentionné dans ce qui suit, que celles du masque connu le plus proche (1, 4, 5).

| | Masque en "filtrette Verto" de 100 g/m² traitée selon le procédé | Masque en "filtrette Verto" de 100 g/m² non traitée et recouverte d'une coiffe poreuse 5 |
|---|---|---|
| Dépression de colmatage (en mm de colonne d'eau) | 3 | 3 |
| Poids de poussières arrêtées lorsque cette dépression est atteinte | 477 mg/dm² | 300 mg/dm² |
| Dépression obtenue après un premier décolmatage par frappage | 0,6 mm | 1,2 mm |
| Dépression obtenue après un deuxième décolmatage | 0,6 mm | 1,4 mm |
| Dépression obtenue après un troisième décolmatage | 0,6 mm | 1,48 mm |
| Dépression obtenue après un quatrième décolmatage | 0,6 mm | 1,52 mm |

Ce tableau montre clairement qu'à dépression égale, le masque de l'invention arrête beaucoup plus de poussières que le masque à coiffe antérieure ou bien qu'à quantité égale de poussières arrêtées, il est plus facile de respirer à travers le masque de l'invention qu'à travers le masque à coiffe.

Le tableau montre également que le masque de l'invention se décolmate par frappage très facilement et que son pouvoir filtrant ainsi que son aisance respiratoire se trouvent identiques à eux-mêmes après chaque nettoyage; par contre, avec le masque à coiffe antérieur, il est moins facile de respirer après chaque nettoyage et la quantité de poussières arrêtées va en décroissant.

Bien entendu, les deux faces de la couche filtrante peuvent être traitées, ce qui rend l'emploi de celle-ci beaucoup plus commode dans des filtres notamment.

L'invention n'est pas limitée aux modes d'exécution du procédé représentés et décrits en détail dans ce qui précède, car diverses modifications peuvent y être apportées sans sortir de son cadre.

**Revendications**

1. Procédé de traitement superficiel d'une couche filtrante fibreuse non tissée et très aérée, à base notamment de polypropylène, et chargée d'électricité pour former un électret, cette couche pouvant équiper un filtre ou constituer, partiellement au moins, un masque respiratoire, ce traitement permettant d'ôter à ladite couche son aspect superficiel pelucheux et colmatable, ainsi que d'y former au moins une peau poreuse décolmatable dont le pouvoir filtrant par effet de surface s'ajoute au pouvoir filtrant électrostatique du coeur sans augmenter pour autant la dépression du flux gazeux traversant cette couche, caractérisé en ce qu'on lisse la ou les surfaces pelucheuses de ladite couche en exerçant une friction légère sous faible pression afin que les fibres saillantes soient couchées sur la masse fibreuse sousjacente sans que celle-ci soit comprimée, et en ce que la friction est exercée à une température de ramollissement telle que les fibres superficielles se soudent entre elles pour former une peau ou glacis poreux.

2. Procédé selon la revendication 1, caractérisé en ce que le lissage est effectué au moyen d'une masse métallique dont la température est comprise entre 115 et 150°C.

3. Procédé selon la revendication 1, caractérisé en ce que la vitesse de défilement relative entre la couche filtrante brute et la masse chauffante, la pression appliquée entre elles et la durée de contact sont déterminées en fonction de l'apport de chaleur pour engendrer une fusion partielle autocollante des fibres de surface en les lissant, mais en évitant que cet effet ne se propage dans la masse.

4. Procédé selon la revendication 1, caractérisé en ce que la couche filtrante défile en s'y appuyant sur un "miroir chauffant".

5. Procédé selon la revendication 2, caractérisé en ce que la couche filtrante entraînée par une calandre traverse un dispositif de lissage comprenant un support sous-jacent, fixe ou tournant, et un cylindre chauffant engendrant une vitesse de couchage tangentiel des fibres saillantes de la couche, vitesse qui est différente, en plus ou en moins, de la vitesse de défilement de cette couche engendrée par la calandre presseuse.

## Patentansprüche

1. Verfahren zur Oberflächenbehandlung einer faserigen und sehr lockeren Vlies-Filterschicht, insbesondere auf Polypropylenbasis, welche zur Bildung eines Elektrets elektrisch geladen ist und zur Ausstattung eines Filters oder zur zumindest teilweisen Bildung einer Atmungsmaske verwendet werden kann, welche Behandlung die Beseitigung des haarigen und verschmutzbaren Oberflächeneindrucks der Schicht und die Bildung zumindest einer proösen reinigbaren Haut darauf gestattet, deren durch den Oberflächeneffekt bedingtes Filtriervermögen zum elektrostatischen Filtriervermögen des Kerns hinzukommt, ohne daß deshalb der Unterdruck des diese Schicht durchquerenden Gasstroms erhöht würde, dadurch gekennzeichnet, daß die haarige(n) Oberfläche(n) der Schicht geglättet wird (werden), indem eine leichte Reibung unter schwachem Druck ausgeübt wird, um die vorstehenden Fasern auf der darunterliegenden faserigen Masse, ohne daß diese zusammengepreßt wird, umzulegen, und daß die Riebung bei einer solchen Erweichungstemperatur ausgeübt wird, daß die Oberflächenfasern zur Bildung einer porösen Haut oder Glasur miteinander verschweißen.

2. Verfahren nach Anspruch 1, dadurch gekennzeichnet, daß die Glättung mittels einer Metallmasse erfolgt, deren Temperatur zwischen 115 und 150°C beträgt.

3. Verfahren nach Anspruch 1, dadurch gekennzeichnet, daß die relative Streichgeschwindigkeit zwischen der unbearbeiteten Filterschicht und der Heizmasse, der zwischen diesen aufgebrachte Druck und die Dauer des Kontakts als Funktion der Zufuhr von Wärme zur Erzeugung einer selbstklebenden, teilweisen Verschmelzung der Oberflächenfasern unter Glättung derselben festgesetzt werden, wobei jedoch vermieden wird, daß sich diese Wirkung in die Masse fortsetzt.

4. Verfahren nach Anspruch 2, dadurch gekennzeichnet, daß die Filterschicht unter Abstützung auf einem "Heizspiegel" vorbeistreicht.

5. Verfahren nach Anspruch 2, dadurch gekennzeichnet, daß die von einem Kalander angetriebene Filterschicht eine Glättungsvorrichtung durchläuft, die einen darunterliegenden fixen oder rotierenden Träger und einen Heizzylinder umfaßt, der eine tangentiale Umlegegeschwindigkeit der vorstehenden Fasern der Schicht bewirkt, welche Geschwindigkeit von der durch die Kalanderpresse erzeugten Streichgeschwindigkeit dieser Schicht mehr oder weniger verschieden ist.

## Claims

1. A process for the superficial treatment of a non-woven, highly aerated, fibrous filtering layer, based in particular in polypropylene and charged with electricity to form an electret, this layer being able to equip a filter or to constitute at least partially a breathing mask, said treatment enabling the fluffy and cloggable superficial appearance to be removed from said layer and enabling at least one porous skin, which may be unclogged, to be formed, the filtering power of which, by the surface effect, is added to the electrostatic filtering power of the core without increasing the depression of the gaseous flow passing through this layer, characterized in that the or each fluffy surface of said layer is smoothed by exerting a light friction under low pressure in order to flatten the projecting fibres on the subjacent fibrous mass without the latter being compressed, and in that the friction is exerted at a softening temperature such that the superficial fibres are welded to one another to form a skin or porous glaze.

2. A process according to claim 1, characterized in that the smoothing is effected by means of a metal mass whose temperature is between 115 and 150°C.

3. A process according to claim 1, characterized in that the relative speed of advance between the crude filtering layer and the heating mass, the pressure applied therebetween and the duration of contact are determined as a function of the supply of heat to produce a partial self-adhesive fusion of the surface fibres on smoothing them, but avoiding this effect propagating in the mass.

4. A process according to claim 2, characterized in that the filtering layer advances, abutting on a "heating mirror".

5. A process according to claim 2, characterized in that the filtering layer driven by a calender passes through a smoothing device comprising a subjacent support, which is fixed or rotary, and a heating cylinder producing a speed of tangential flattening of the projecting fibres of the layer, which speed is different, more or less, from the speed of advance of this layer produced by the calender.

Fig.1

Fig.2

Fig.3

Fig.5

Fig.4